# FASCICULE DE BREVET EUROPEEN

(11) **EP 1 144 243 B1**
(45) Date de publication et mention de la délivrance du brevet: **09.04.2003**
(21) Numéro de dépôt: 00900618.0
(22) Date de dépôt: 19.01.2000
(51) Int. Cl.: B62M 9/12

(54) **DISPOSITIF DE CHANGEMENT DE VITESSE POUR CYCLE**
GANGSCHALTUNGSEINRICHTUNG FÜR EIN FAHRRAD
CYCLE GEAR-SHIFT DEVICE

(30) Priorité: 19.01.1999 FR 9900736
(43) Date de publication de la demande: 17.10.2001
(73) Titulaire: I-NOVA CONCEPT, 69001 Lyon (FR)
(72) Inventeur: Vaillant, Frédéric, 01260 Ruffieu en Valromey (FR)
(74) Mandataire: Gasquet, Denis
(86) Numéro de dépôt international: FR0000114
(87) Numéro de publication internationale: WO00043264

(56) Documents cités:
- EP-A- 0 653 347
- EP-A- 0 718 184
- US-A- 4 330 137

## Description

La présente invention concerne un dispositif de changement de vitesse pour cycle à transmission par chaîne et pignons et plus précisément un dispositif destiné à permettre à la chaîne de passer d'un pignon à un autre pour modifier le développement, c'est-à-dire le rapport de transmission.

Sur les bicyclettes actuelles, les changements de vitesse se font grâce à un dispositif assurant le déplacement de la chaîne en prise avec un pignon, vers un autre pignon d'un diamètre différent, assurant ainsi une modification du rapport de transmission. Il est déjà connu des dispositifs de ce type appelés dérailleurs lorsqu'ils sont disposés près du moyeu arrière ou dispositifs de changement de plateau lorsqu'ils sont disposés près du pédalier, et qui comprennent un corps supérieur fixé au cadre de la bicyclette et un corps inférieur retenant la chaîne, qui est relié de façon mobile par rapport au corps supérieur par une structure du type en parallélogramme pouvant osciller transversalement pour déplacer latéralement la chaîne et permettre les différents changements de vitesse. La structure en parallélogramme est constituée par un ensemble assez complexe de nombreuses biellettes pivotantes. Les mouvements du parallélogramme sont commandés par l'action d'un câble flexible métallique dont l'extrémité est reliée à un levier fixé sur le cadre de façon pivotante, que doit manoeuvrer le cycliste pour ainsi effectuer les différents changements de vitesse. De tels dispositifs sont, par exemple, décrits dans les demandes de brevet françaises publiées sous les numéros 2 620 104, 2 637 249 et 2 639 313.

Par le brevet américain US 4 330 137 on connaît un dispositif de changement de vitesse, dont l'organe mobile de changement de vitesse, c'est-à-dire l'organe de déplacement de la chaîne est mobile en translation latérale. A cet effet ledit organe est par un systeme du type parallelogramme deformable constitué de deux biellettes pivotante.

Ces dispositifs de changement de vitesse de l'art antérieur présentent toutefois de nombreux inconvénients liés à leur utilisation. Ils sont généralement de conception compliquée et nécessitent un grand nombre de pièces complexes en mouvement les unes par rapport aux autres entraînant ainsi des problèmes de poids et des problèmes de fiabilité. De plus, ces dispositifs de changement de vitesse ne permettent pas leur actionnemeht lorsque l'utilisateur pédale à pleine puissance et que la transmission s'effectue en charge maximale. Ainsi, lorsque le cycliste est dans une position couramment appelée «en danseuse», il lui est impossible de changer de vitesse sans risquer un saut de chaîne ou le déraillement de celle-ci.

De plus, les dispositifs de changement de vitesse de l'art antérieur sont d'un poids relativement élevé et d'une précision douteuse quant à la position de la chaîne en prise. Pour solutionner le problème lié à l'imprécision du positionnement, certains constructeurs ont prévu un système d'indexation du levier de commande. Mais compte tenu de la transmission par câble métallique, il est tout à fait illusoire de vouloir imposer une position bien définie à la pièce mobile du dérailleur, et c'est généralement le cycliste qui, intuitivement, place le levier de commande dans la position la plus appropriée, puis il affine le réglage en s'aidant du bruit que peut faire la chaîne quand elle n'est pas tout à fait dans la bonne position. On comprendra donc aisément que le cycliste se trouve être alors plus préoccupé par son changement de vitesse que par son pédalage.

La présente invention a pour objectif de résoudre les problèmes précités des dispositifs de changement de vitesse de l'art antérieur à l'aide de moyens simples, fiables, faciles à mettre en oeuvre et peu encombrants. Elle permet l'installation de dispositifs de changement de vitesse susceptibles de fonctionner même lorsque la chaîne de transmission est fortement sollicitée, lesdits dispositifs étant avantageusement peu encombrants, légers et fiables.

Ainsi, selon la caractéristique principale du dispositif de changement de vitesse pour cycle du type à transmission par chaîne, pignons et plateau, ledit dispositif étant constitué d'un dispositif de commande destiné à actionner un organe mobile de changement de vitesse qui coopère avec la chaîne de transmission pour la faire passer d'un pignon ou plateau vers un autre pignon ou plateau, celui-ci est caractérisé en ce que l'organe mobile de changement de vitesse est mobile en pivotement autour d'un axe de pivotement.

Selon une caractéristique complémentaire du dispositif de changement de vitesse pour cycle selon l'invention, l'organe mobile de changement de vitesse comporte deux éléments latéraux d'actionnement destinés à coopérer avec la chaîne de transmission, un élément latéral interne et un élément latéral externe.

Selon un premier mode de réalisation du dispositif de changement de vitesse pour cycle, l'élément latéral interné est constitué par un élément longiligne de révolution dont la surface externe est destinée à coopérer avec la chaîne lors du pivotement de l'organe mobile du plan longitudinal du cadre du cycle vers l'extérieur.

Selon une autre caractéristique, l'élément latéral externe est formé par une flasque externe dont la face interne est destinée à coopérer avec la chaîne lorsque l'organe mobile pivote de l'extérieur vers le plan longitudinal du cadre du cycle.

Selon une caractéristique complémentaire, le dispositif de changement de vitesse pour cycle est caractérisé en ce que l'axe de pivotement de l'organe mobile de changement de vitesse est situé à l'extrémité inférieure dudit organe, le pivotement de l'organe mobile s'effectuant au-dessus du plan sensiblement horizontal contenant l'axe de pivotement.

Selon un mode de réalisation du dispositif de changement de vitesse pour cycle selon l'invention, l'organe mobile de changement de vitesse pivote dans un plan incliné par rapport à la verticale.

Selon une autre caractéristique du dispositif de changement de vitesse, l'axe de pivotement est monté pivotant sur une pièce de liaison fixée au cadre.

Selon une caractéristique complémentaire du dispositif de changement de vitesse, la pièce de liaison est montée sur un hauban arrière du cadre du cycle.

Selon un mode de réalisation du dispositif de changement de vitesse, la pièce de liaison présente sur sa face externe des dégagements destinés à permettre le passage des plateaux, ces dégagements confiant à la face externe de la pièce de liaison un profil en escalier.

Selon le mode de réalisation préféré du dispositif de changement de vitesse pour cycle, celui-ci est disposé au niveau du pédalier et permet de faire passer la chaîne d'un plateau vers un autre plateau.

D'autres caractéristiques et avantages de l'invention se dégageront de la description qui va suivre en regard des dessins annexés qui ne sont donnés qu'à titre d'exemples non limitatifs.

Les figures 1 à 12 illustrent un mode de réalisation du dispositif de changement de vitesse de l'invention et des variantes d'exécution de celui-ci.

La figure 1 illustre en vue latérale un cycle destiné à être équipé du dispositif de changement de vitesse de l'invention.

La figure 2 représente en perspective de 3/4 arrière un dispositif de changement de vitesse disposé au niveau du pédalier.

La figure 3 illustre en perspective de 3/4 avant ledit dispositif.

La figure 4 représente le dispositif de changement de vitesse en vue latérale.

Les figures 5a, 5b, 5c illustrent selon une vue arrière le dispositif respectivement dans une position extrême, dans une position intermédiaire et dans l'autre de ces positions extrêmes.

La figure 6 représente schématiquement le dispositif de changement de vitesse avec les plateaux en vue latérale.

La figure 7 illustre en perspective la pièce de liaison.

La figure 8 illustre en vue latérale une variante d'exécution de l'organe mobile de changement de vitesse.

La figure 9 illustre selon une vue similaire à la figure 6, un deuxième mode de réalisation du dispositif de changement de vitesse.

La figure 10 illustre selon une vue similaire à la figure 5b, le deuxième mode de réalisation du dispositif de changement de vitesse.

Les figures 11 et 12 illustrent selon des vues similaires aux figures 9 et 10 un troisième mode de réalisation du dispositif de changement de vitesse.

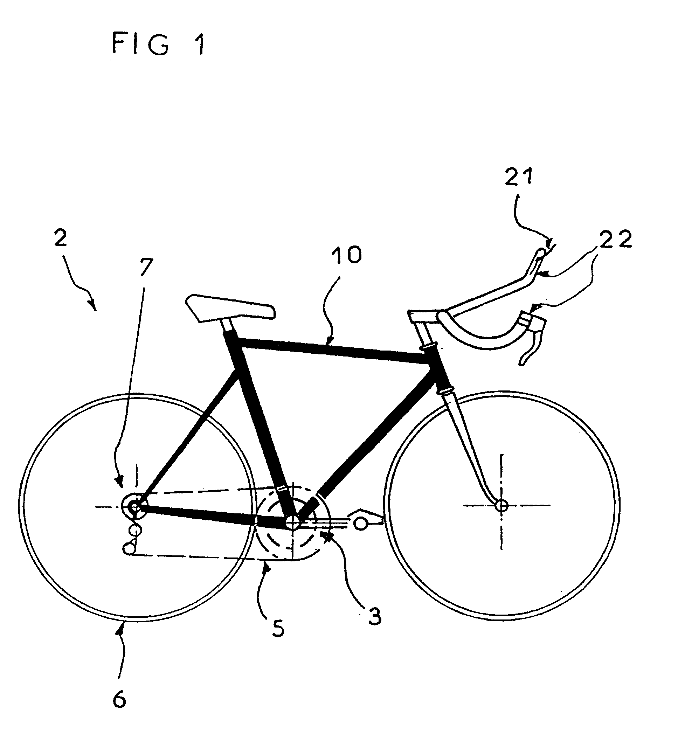

Selon l'invention, le dispositif de changement de vitesse portant la référence générale (1) est destiné à équiper un cycle (2) de tout type, aussi bien un vélo de type tous terrains qu'un cadre classique de vélo de route tel qu'illustré figure 1. Selon le mode de réalisation décrit, le dispositif de changement de vitesse (1) est disposé au niveau du pédalier (3) de manière à permettre à la chaîne de transmission (5) de passer d'un plateau (4a) vers un autre plateau (4b), ce dispositif constituant ainsi le dérailleur avant ou dispositif de changement de plateau. Toutefois, ce type de dispositif pourrait également être disposé au niveau de la roue arrière (6) et de ses pignons (7) et constituer ainsi le dérailleur arrière.

Ainsi, le dispositif de changement de vitesse (1) est destiné à permettre à la chaîne de transmission (5) de changer de pignon et peut être installé à l'arrière comme à l'avant moyennant quelques adaptations.

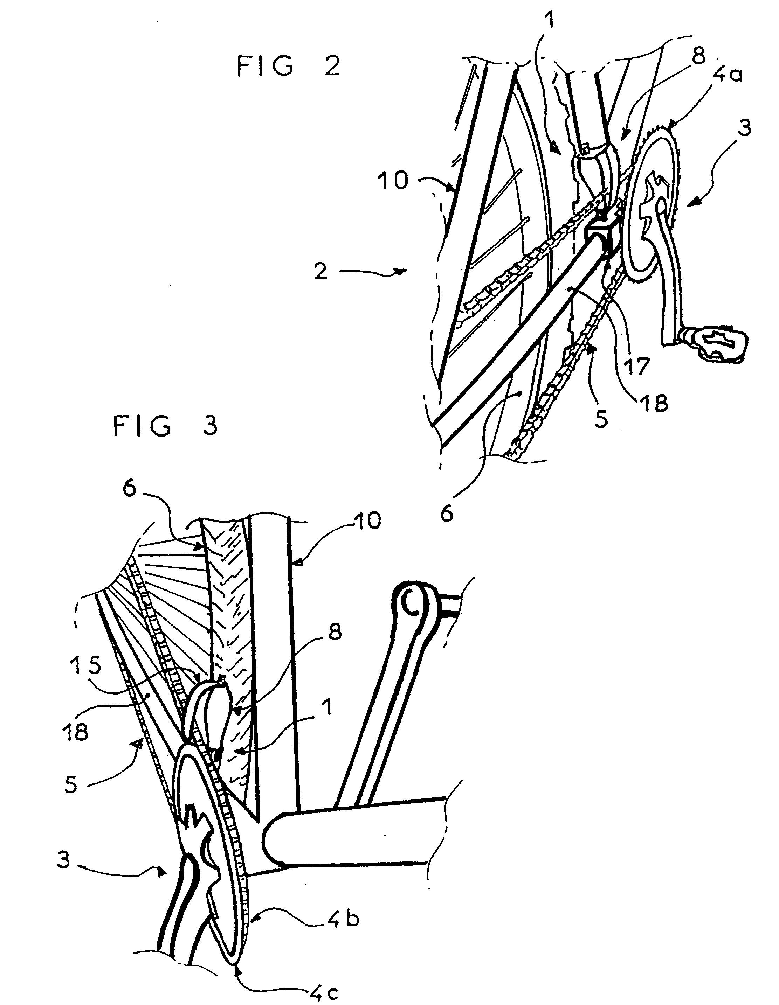

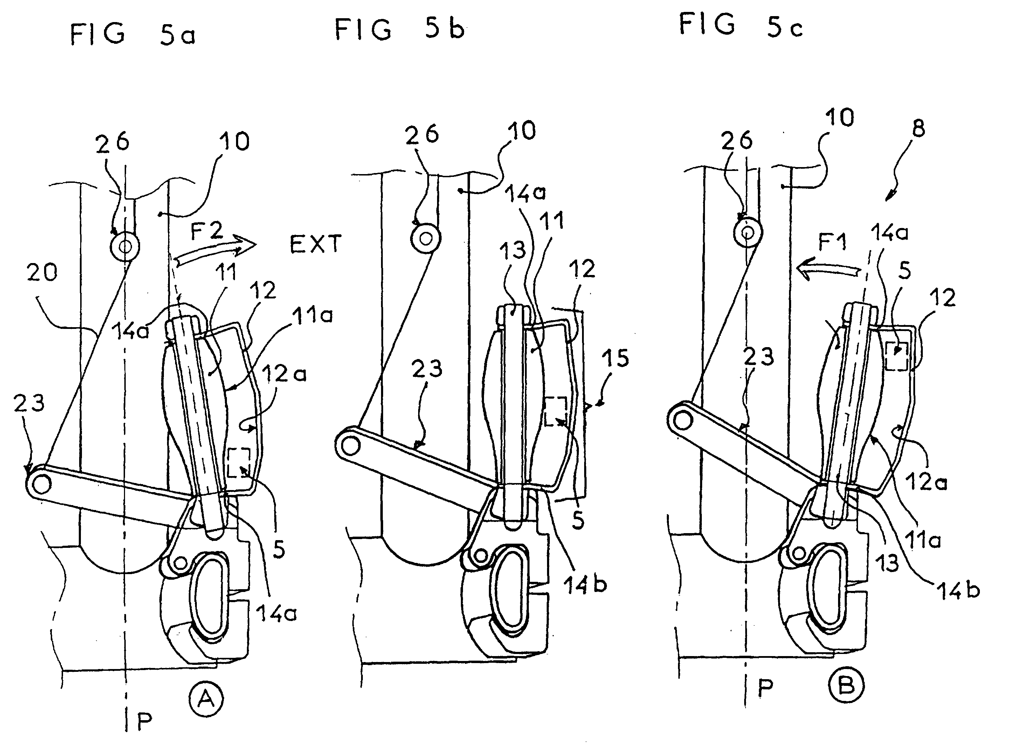

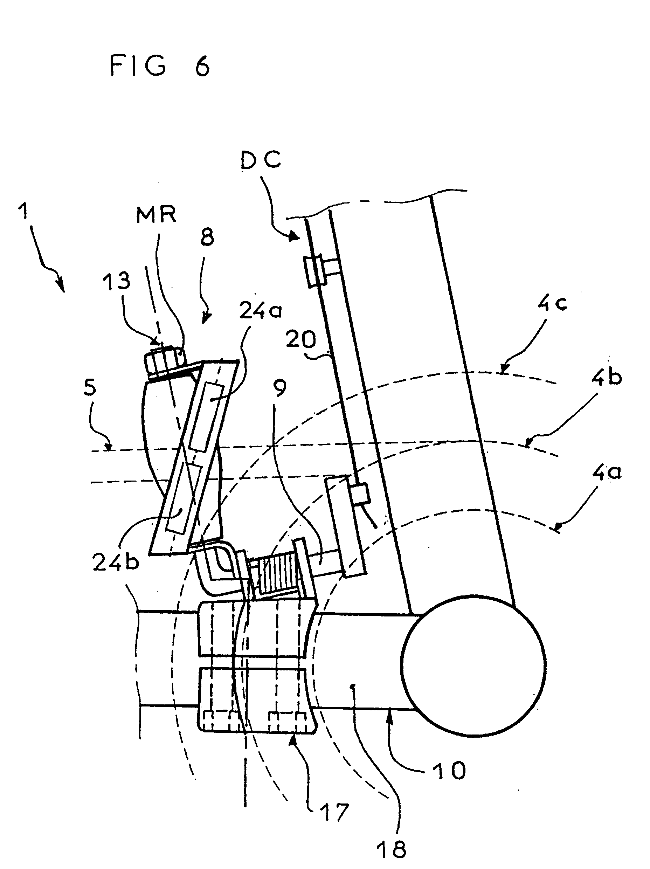

Selon le mode de réalisation préféré de l'invention et comme le montrent les figures 2 et 3, le dispositif de changement de vitesse (1) est disposé au niveau du pédalier (3) pour permettre le changement des plateaux (4a, 4b, 4c) l'invention étant décrite et illustrée figure 6 pour un cycle utilisant trois plateaux (4a, 4b, 4c) mais pouvant être utilisée pour un cycle muni d'un nombre différent de plateaux. Le dispositif de changement de vitesse (1) est constitué par un organe mobile de changement de vitesse (8) destiné à agir directement sur la chaîne (5) pour lui faire changer de pignon, on entendra par pignon aussi bien les pignons arrières (7) que les plateaux avant (4a, 4b, 4c). Cet organe mobile de changement de vitesse (8) est mobile en déplacement de manière continue entre deux positions extrêmes (A, B) illustrées figures 5a et 5c sous l'action d'un dispositif de commande (DC) actionné par l'utilisateur. Le dispositif de commande (DC) permet avantageusement de positionner de manière continue l'organe mobile de changement de vitesse (8) dans n'importe quelles positions comprises entre les positions extrêmes (A, B) comme, par exemple, dans la position intermédiaire illustrée figure 5b, et ce afin de pouvoir positionner l'organe précisément pour éviter les problèmes de frottement.

Selon l'invention, l'organe mobile de changement de vitesse (8) est mobile en pivotement entre ses deux positions extrêmes (A, B) qui correspondent aux positions de la chaîne (5) sur les plateaux d'extrémité (4a, 4c) respectifs. Il se déplace ainsi en rotation dans un plan transversal autour d'un axe de pivotement (9) propre situé sensiblement dans le plan longitudinal du cadre (10) du cycle (2). Cette rotation ou ce pivotement de l'organe mobile (8) s'effectue par rapport au cadre (10) du cycle (2), on peut d'ailleurs noter que l'axe d'articulation (9) entre le cadre et l'organe mobile peut être porté par l'une ou l'autre desdites pièces.

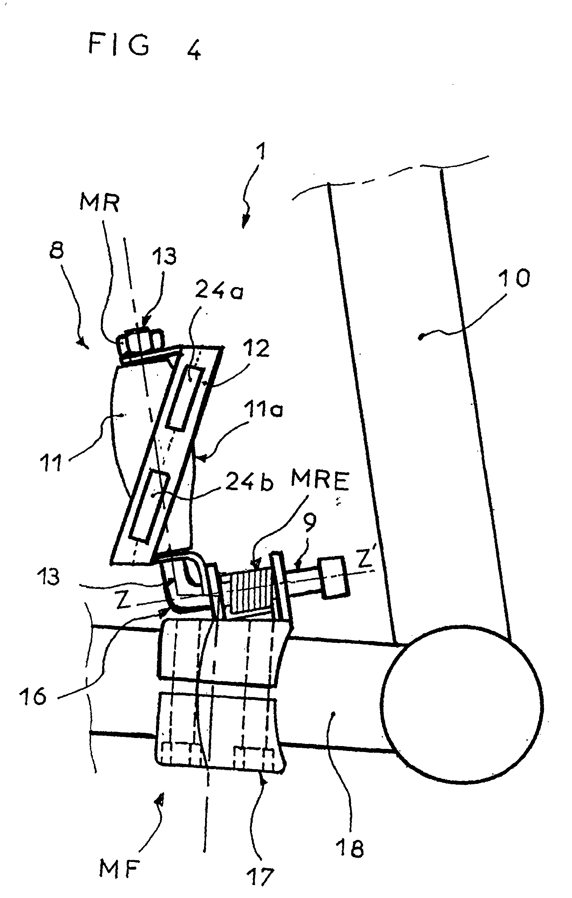

Selon le mode de réalisation préféré du dispositif de changement de vitesse (1) et comme le montrent les figures 4, 5a, 5b et 5c, l'organe mobile de changement de vitesse (8) est constitué de deux éléments latéraux d'actionnement (11, 12) destinés à entraîner la chaîne dans un déplacement transversal d'un plateau (4a, 4b, 4c) vers un autre plateau. L'un des éléments est disposé vers l'extérieur et est appelé élément latéral externe (12) ; il est formé d'une flasque ou paroi externe dont la face intérieure (12a) est destinée à coopérer avec la chaîne de transmission pour la solliciter selon F1 de l'extérieur (EXT) vers le plan de symétrie longitudinal (P) du cadre (10). Ainsi, l'élément latéral externe permet de solliciter la chaîne (5) du plateau externe (4c) ou grand plateau vers le plateau interne ou petit plateau (4a). Notons que la paroi formant l'élément latéral externe (12) comporte plusieurs portions de parois dont l'inclinaison varie de haut en bas. Ainsi, lors du pivotement de l'organe mobile de changement de vitesse (8) celui-ci présente toujours pour coopérer latéralement avec la chaîne de transmission (5) une portion de paroi dont l'inclinaison est identique par rapport à ladite chaîne.

Le deuxième élément latéral d'actionnement appelé élément latéral interne est formé par un élément longiligne (11) porté par un axe (13) et qui présente une rampe d'actionnement (11a) destinée à coopérer avec la chaîne de transmission (5) pour la déplacer dans le plan transversal du plan longitudinal (P) du cadre (10) vers l'extérieur (EXT) selon F2. Cet élément interne (11) possède comme le montrent les figures 4, Sa à 5c une forme de révolution légèrement bombée de manière à présenter en coupe un profil (11a) susceptible d'actionner latéralement la chaîne de transmission (5) lors de son pivotement. Notons que cet élément longiligne bombé (11) peut être avantageusement monté libre en rotation autour de son axe propre (13) de manière à accompagner la chaîne (5) dans son mouvement de transmission lorsque l'utilisateur effectue un changement de vitesse. Selon le mode de réalisation préféré, l'élément longiligne bombé (11) monté libre en rotation autour de son axe propre (13) est réalisé avantageusement en polyuréthanne, toutefois il pourrait être réalisé dans un matériau différent.

Selon le mode de réalisation décrit, les éléments latéraux d'actionnement (11, 12) sont reliés entre eux par deux portions de parois supérieures (14a) et inférieures (14b) afin de former une boucle fermée (15) ou étrier à l'intérieur de laquelle passe la chaîne de transmission (5). Notons que l'élément latéral externe (12) porte des galets ou rouleaux (24a, 24b) destinés à favoriser la coopération avec la chaîne (5) lors d'un changement de vitesse.

Selon ce premier mode de réalisation, l'axe de pivotement (9) de l'organe mobile de changement de vitesse est disposé dans un plan sensiblement longitudinal de manière à provoquer la rotation de l'organe mobile de changement de vitesse dans un plan transversal. Cet axe de pivotement (9) est avantageusement situé à l'extrémité inférieure de l'organe mobile de changement de vitesse (8) de manière à ce que la rotation ou pivotement de l'organe mobile s'effectue au-dessus du plan horizontal comportant l'axe de pivotement (9).

Par ailleurs et comme le montre la figure 4, l'axe de pivotement (9) peut être légèrement incliné du haut (HA) et de l'avant (AV) vers le bas (BA) et l'arrière (AR) sans pour autant sortir du champ de protection de l'invention. De ce fait, le plan transversal (1) où s'effectue le déplacement de l'organe mobile de changement de vitesse (8) est également incliné par rapport à la verticale pour s'étendre vers l'arrière et vers le haut De cette manière, la coopération de l'organe mobile de changement de vitesse (8) et de la chaîne de transmission (5) s'effectue dans des positions respectives par rapport aux différents plateaux (4a, 4b, 4c) sensiblement similaires et de manière à ce que les éléments latéraux sollicitent la chaîne non seulement latéralement mais également en hauteur, dans la direction de son déplacement vers le pignon suivant.

Selon le mode de construction illustré de l'invention, l'organe mobile de changement de vitesse (8) est solidaire de son axe de pivotement (9), celui-ci pouvant être formé par le prolongement de l'axe de pivotement propre (13) de l'élément latéral interne, les deux axes formant un coude à angle droit (16) tel qu'illustré figure 4. L'axe de pivotement (9) est destiné à être monté pivotant, selon un axe (ZZ') légèrement incliné sur une pièce de liaison (17) solidaire du cadre par l'intermédiaire de moyens de fixation (MF).

Il est important de noter que la position en hauteur des éléments latéraux internes et externes (11, 12) le long de l'axe (13) peut être réglée à l'aide de moyens de réglage (MR) afin de permettre un positionnement précis par rapport à la chaîne de transmission (5) des éléments latéraux d'actionnement (11, 12). Ces moyens de réglage (MR) peuvent être obtenus de plusieurs manières comme, par exemple, à l'aide d'un système de tige filetée et d'écrou de façon connue en soi. Ces moyens de réglage (MR) permettent donc de modifier la position relative en hauteur entre l'organe mobile de changement de vitesse (8) et la chaîne de transmission, il va de soi que les moyens de réglage pourraient permettre le réglage de la position des éléments latéraux indépendamment l'un de l'autre.

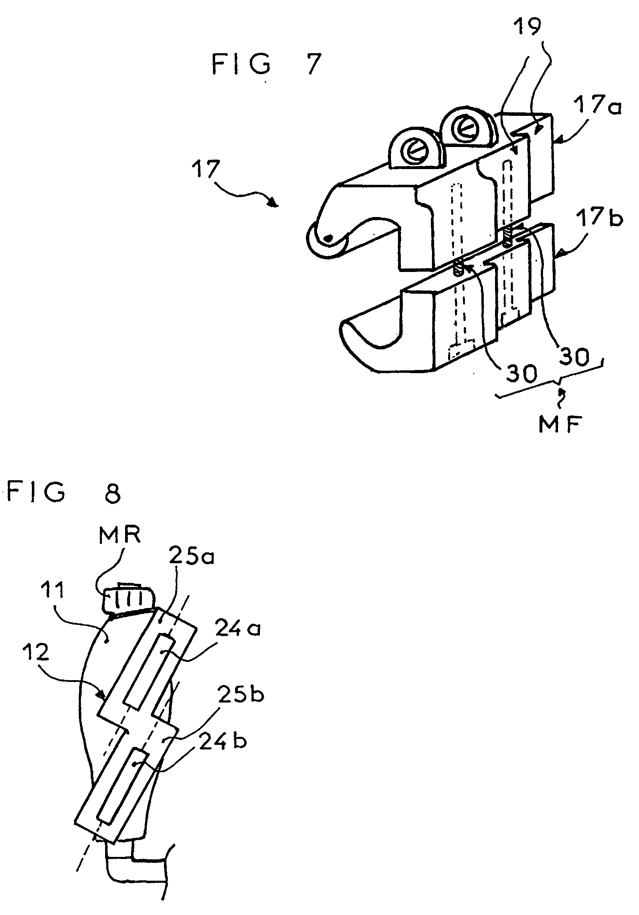

Selon le mode de réalisation préféré du dispositif de changement de vitesse (1) de l'invention, la pièce de liaison (17) est destinée à être fixée au. cadre (10) avantageusement sur un hauban arrière (18) de celui-ci, comme le montrent les figures 2 et 3. Cette pièce de liaison (17) illustrée figure 7 est constituée de deux mâchoires (17a, 17b) reliées ensemble par des tiges filetées (30) qui constituent les moyens de fixation (MF) de la pièce de liaison.

Il est important de noter que la pièce de liaison présente sur sa face externe des dégagements (19) destinés à permettre le passage des plateaux (4a, 4b), ces dégagements confiant à la face externe de la pièce de liaison (17) un profil en escalier. Notons que la forme en escalier de la pièce de liaison (17) permet avantageusement à celle ci d'occuper l'espace tangent aux plateaux situé entre les deux brins de chaîne, empêchant celle-ci d'être entraînée dans cet espace par l'un des plateaux. Ce positionnement et la forme particulière de la pièce permet d'éviter ainsi des sauts de chaîne ou autre déraillement de celle-ci. La pièce de liaison présente sur sa face supérieure deux pattes transversales munies chacune d'un orifice dans lequel passe l'axe de pivotement (9) de l'organe mobile de changement de vitesse (8). De plus, les mâchoires présentent des surfaces inclinées pour pouvoir s'adapter à n'importe quelles formes de haubans ou de tubes.

Selon le mode de réalisation préféré du dispositif de changement de vitesse (1), le dispositif de commande (DC) destiné à actionner l'organe mobile de changement de vitesse (8) pour provoquer son pivotement est constitué par un câble (20) destiné à être actionné par un levier de manoeuvre (21) situé sur le cadre (10) ou le guidon (22) du cycle, par exemple, comme le montre la figure 1. Le câble (20) est relié par l'intermédiaire d'un organe de renvoi (26) à un bras de levier (23) lié à l'axe de pivotement (9) afin de provoquer la rotation de celui-ci lors de l'actionnement du levier de manoeuvre (21). Notons que l'axe de pivotement (9) ou le bras de levier (23) est soumis également à l'action de moyens de rappel élastique (MRE) de manière connue en soi pour permettre la rotation inverse de l'organe mobile de changement de vitesse (8).

Selon une variante d'exécution non représentée, l'organe mobile de changement de vitesse est monté pivotant sur une pièce de liaison fixée sur un profilé du cadre différent du hauban arrière comme sur le tube de selle, par exemple.

Par ailleurs, l'élément latéral externe (12) peut comporter des rouleaux de roulement (24a, 24b) destinés à faciliter le mouvement de transmission de la chaîne (5) lors des changements de vitesse en diminuant les frottements occasionnés. Selon une variante, la flasque latérale externe (12) est formée de deux parties (25a, 25b) comportant chacune un rouleau (24a, 24b), la partie supérieure (25a) étant décalée vers l'arrière par rapport à la partie inférieure (25b). Notons que les rouleaux (24a, 24b) sont ainsi articulés selon des axes parallèles entre eux, le décalage entre les axes des rouleaux permettant notamment de faciliter leur montage. On peut noter que les surfaces d'actionnement des éléments d'actionnement latéraux (11, 12) destinées à coopérer avec la chaîne (5) lors du pivotement de l'étrier (15) formant l'organe mobile de changement de vitesse (8) sont articulées en rotation autour d'axes sensiblement verticaux de manière à pouvoir rouler lors du contact avec la chaîne (5). Ainsi, le frottement des surfaces contre la chaîne est fortement réduit et ne pénalise pas la transmission par la chaîne notamment lors du changement de vitesse.

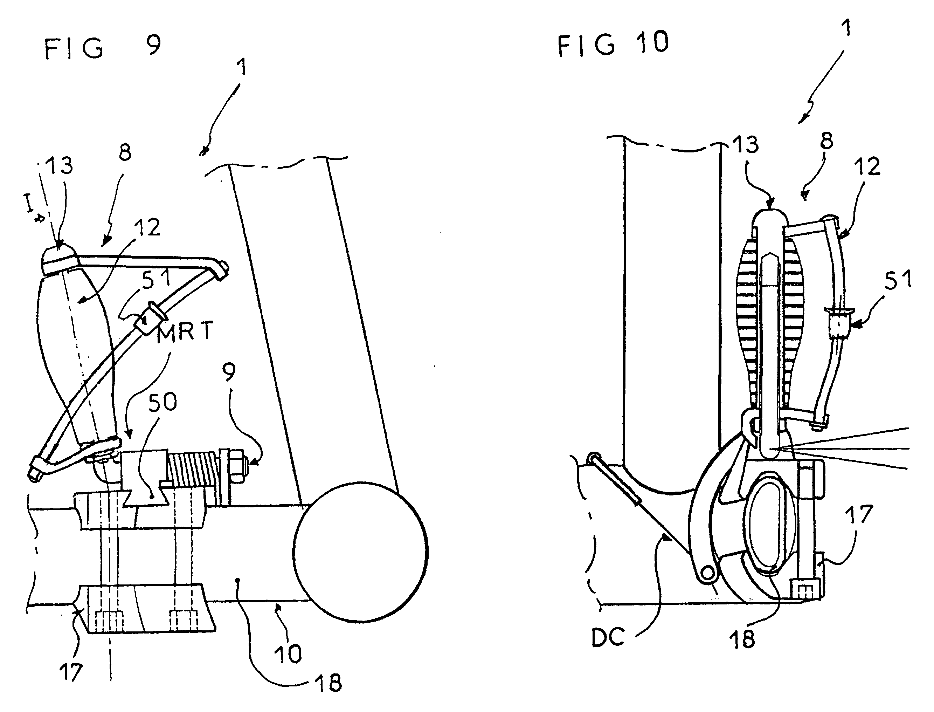

Selon un deuxième mode de réalisation illustré figures 9 et 10 où les pièces communes portent la même référence que dans le premier mode de réalisation, l'axe de pivotement (9) de l'organe mobile de changement de vitesse (8) est disposé sensiblement horizontalement. Contrairement au premier mode de réalisation où cet axe présentait un angle droit avec l'organe mobile, l'axe de pivotement (9) forme un angle obtus avec l'axe propre (13) de l'organe mobile. Ainsi, le pivotement de l'organe mobile (8) s'effectue toujours dans un plan transversal (I) non orthogonal à la chaîne (5). Ce plan de pivotement est avantageusement incliné vers l'arrière et vers le haut comme le montre la figure 9, ainsi il forme avec la chaîne un angle supérieur à 90°.

Selon ce mode de réalisation, le dispositif de changement de vitesse présente des moyens de réglage transversaux (MRT) destinés à permettre le positionnement précis de l'organe mobile (8) ou de son axe de pivotement (9) par rapport à la chaîne (5). Ces moyens de réglage peuvent être obtenus de manière connue en soi à l'aide d'une pièce coulissante (50) présentant un profil en queue d'aronde et dont la position est réglable dans sa glissière située sur la pièce de liaison (17), ladite pièce coulissante portant l'articulation de l'axe de pivotement (9).

Par ailleurs, l'élément latéral externe (12) peut comporter un galet ou roulette flottante (51) destinée à coopérer latéralement avec la chaîne pour faciliter les changements de vitesse, ladite roulette pouvant coulisser le long d'une tige (12) qui forme l'élément externe et qui est de forme courbe pour ne pas interférer avec les plateaux lors du pivotement de l'organe mobile. On peut noter que le dispositif de commande (DC) du dispositif de changement de vitesse (1) présente une configuration différente de celle du premier mode de réalisation.

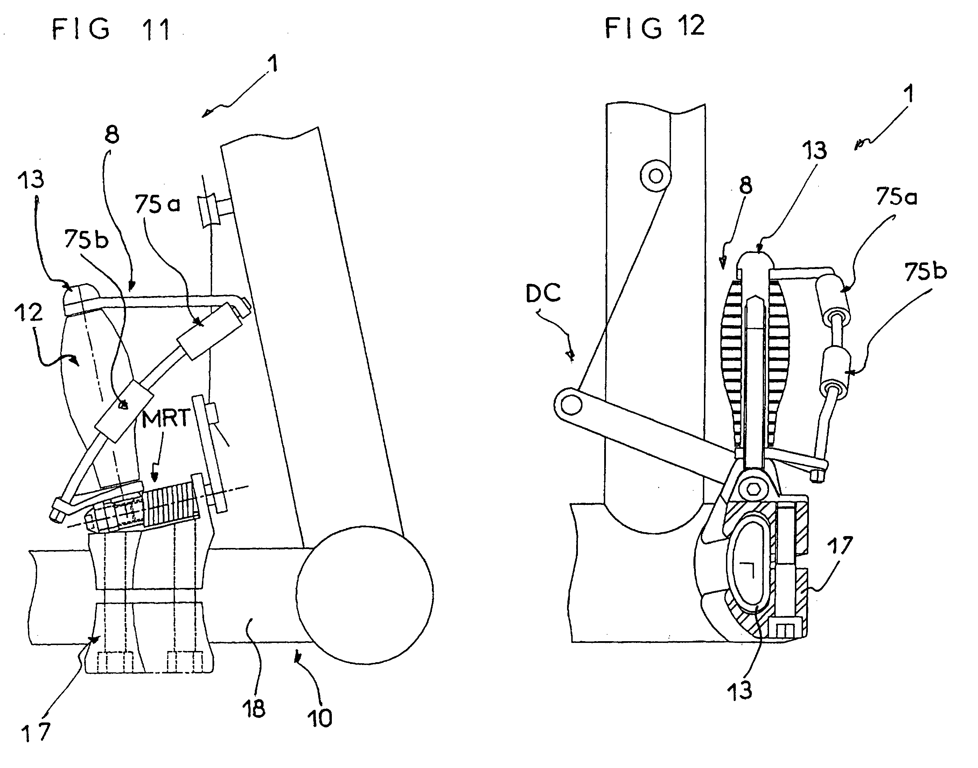

Selon un troisième mode de réalisation illustré figures 11 et 12, l'axe de pivotement (9) de l'organe mobile est orthogonal à son axe propre (13) et est ainsi légèrement incliné par rapport au plan horizontal. L'élément latéral externe est avantageusement formé par une tige recourbée présentant deux galets (75a, 75b) destinés à coopérer latéralement avec la chaîne. Le positionnement des galets sur la tige est réglé pour permettre la coopération avec la chaîne lors des changements de plateau. On peut noter que la tige courbe (12) est disposée légèrement au dessus du grand plateau pour pouvoir se mouvoir transversalement lors de son pivotement sans être gênée par ledit plateau, la courbure de la tige (12) suit avantageusement une courbe concentrique aux plateaux c'est à dire centrée sur l'axe du pédalier. Par ailleurs, on peut noter que l'élément latéral externe n'est pas forcément formé par une tige mais peut également être réalisé par une tôle ou autre sans pour autant sortir du champ de protection de l'invention.

## Revendications

1. Dispositif de changement de vitesse (1) pour cycle (2) du type à transmission par chaîne (5), pignons (7) et plateau (4a, 4b, 4c, ), ledit dispositif étant constitué d'un dispositif de commande (DC) destiné à actionner un organe mobile de changement de vitesse (8) qui coopère avec la chaîne de transmission (5) pour la faire passer d'un pignon ou plateau (4a, 4b, 4c, 7) vers un autre pignon ou plateau (4a, 4b, 4c, 7), **caractérisé en ce que** l'organe mobile de changement de vitesse est mobile en pivotement autour d'un axe de pivotement (9), disposé dans un plan sensiblement longitudinal de manière à provoquer la rotation dudit organe mobile dans un plan transversal.

2. Dispositif de changement de vitesse (1) pour cycle (2) selon la revendication 1, **caractérisé en ce que** l'organe mobile de changement de vitesse (8) comporte deux éléments latéraux d'actionnement (11, 12) destinés à coopérer avec la chaîne de transmission (5), un élément latéral interne (11) et un élément latéral externe (12).

3. Dispositif de changement de vitesse (1) pour cycle (2) selon la revendication 2, **caractérisé en ce que** l'élément latéral interne (11) est constitué par un élément longiligne de révolution dont la surface externe (11a) est destinée à coopérer avec la chaîne (5) lors du pivotement de l'organe mobile (8) du plan longitudinal (P) du cadre (10) du cycle (2) vers l'extérieur (EXT).

4. Dispositif de changement de vitesse (1) pour cycle (2) selon la revendication 2 ou 3, **caractérisé en ce que** l'élément latéral externe (12) est formé par une flasque externe dont la face interne (12a) est destinée à coopérer avec la chaîne (5) lorsque l'organe mobile (8) pivote de l'extérieur (EXT) vers le plan longitudinal (P) du cadre (10) du cycle (2).

5. Dispositif de changement de vitesse (1) pour cycle (2) selon l'une quelconque des revendications précédentes, **caractérisé en ce que** l'axe de pivotement (9) de l'organe mobile de changement de vitesse (8) est situé à l'extrémité inférieure dudit organe, le pivotement de l'organe mobile s'effectuant au-dessus du plan sensiblement horizontal contenant l'axe de pivotement (9).

6. Dispositif de changement de vitesse (1) pour cycle (2) selon l'une quelconque des revendications précédentes, **caractérisé en ce que** l'organe mobile de changement de vitesse (8) pivote dans un plan (I) incliné par rapport à la verticale.

7. Dispositif de changement de vitesse (1) pour cycle (2) selon l'une quelconque des revendications précédentes, **caractérisé en ce que** l'axe de pivotement (9) est monté pivotant sur une pièce de liaison (17) fixée au cadre (10).

8. Dispositif de changement de vitesse (1) pour cycle (2) selon la revendication 7, **caractérisé en ce que** la pièce de liaison (17) est apte à être montée sur un hauban arrière (18) du cadre (10) du cycle (2).

9. Dispositif de changement de vitesse (1) pour cycle (2) selon l'une quelconque des revendications 7 ou 8, **caractérisé en ce que** la pièce de liaison (17) présente sur sa face externe des dégagements (19) destinés à permettre le passage des plateaux (4a, 4b), ces dégagements confiant à la face externe de la pièce de liaison (17) un profil en escalier.

10. Dispositif de changement de vitesse (1) pour cycle (2) selon l'une quelconque des revendications précédentes, **caractérisé en ce qu'**il est apte à être disposé au niveau du pédalier (3) et permet de faire passer la chaîne d'un plateau (4a, 4b, 4c) vers un autre plateau.

## Patentansprüche

1. Gangschaltungseinrichtung (1) für ein Fahrrad (2) vom Typ des Antriebs durch Kette (5), Ritzel (7) und Kettenblatt (4a, 4b, 4c), wobei die Einrichtung eine Bedienvorrichtung (DC) aufweist, die zur Betätigung eines beweglichen Gangschaltungselements (8) vorgesehen ist, das mit der Antriebskette (5) zusammenwirkt, damit diese von einem Ritzel oder Kettenblatt (4a, 4b, 4c, 7) auf ein anderes Ritzel oder Kettenblatt (4a, 4b, 4c, 7) überwechselt, **dadurch gekennzeichnet, dass** das bewegliche Gangschaltungselement drehbar beweglich ist um eine Drehachse (9), die genau in einer Längsebene angeordnet ist, um die Rotation des beweglichen Gangschaltungselementes in einer Querebene zu bewirken.

2. Gangschaltungseinrichtung (1) für ein Fahrrad (2) gemäß Anspruch 1, **dadurch gekennzeichnet, dass** das bewegliche Gangschaltungselement (8) zwei seitliche Betätigungselemente (11, 12) aufweist, die zum Zusammenwirken mit der Antriebskette (5) vorgesehen sind, ein inneres seitliches Element (11) und ein äußeres seitliches Element (12),

3. Gangschaltungseinrichtung (1) für ein Fahrrad (2) gemäß Anspruch 2, **dadurch gekennzeichnet, dass** das innere seitliche Element (11) durch ein lang gezogenes Drehelement gebildet ist, dessen Außenfläche (11a) zum Zusammenwirken mit der Antriebskette (5) während der Drehung des beweglichen Elementes (8) aus der Längsebene (P) des Rahmens (10) des Fahrrades (2) nach außen (EXT) vorgesehen ist.

4. Gangschaltungseinrichtung (1) für ein Fahrrad (2) gemäß einem der Ansprüche 2 oder 3, **dadurch gekennzeichnet, dass** das äußere seitliche Element (12) gebildet ist aus einem äußeren Flansch, dessen Innenfläche (12a) zum Zusammenwirken mit der Antriebskette (5) vorgesehen ist, während das bewegliche Element (8) sich von außen (EXT) in die Längsebene (P) des Rahmens (10) des Fahrrades (2) dreht.

5. Gangschaltungseinrichtung (1) für ein Fahrrad (2) gemäß einem der vorhergehenden Ansprüche, **dadurch gekennzeichnet, dass** die Drehachse (9) des beweglichen Gangschaltungselementes (8) am unteren Ende des Elementes angeordnet ist, und dass die Drehung des beweglichen Elementes über der genau horizontalen Ebene stattfindet, die die Drehachse (9) beinhaltet.

6. Gangschaltungseinrichtung (1) für ein Fahrrad (2) gemäß einem der vorhergehenden Ansprüche, **dadurch gekennzeichnet, dass** sich das bewegliche Gangschaltungselement (8) in einer bezüglich der Senkrechten geneigten Ebene (I) dreht.

7. Gangschaltungseinrichtung (1) für ein Fahrrad (2) gemäß einem der vorhergehenden Ansprüche, **dadurch gekennzeichnet, dass** die Drehachse (9) drehbar montiert ist auf einem Verbindungsstück (17), das am Rahmen (10) befestigt ist.

8. Gangschaltungseinrichtung (1) für ein Fahrrad (2) gemäß Anspruch 7, **dadurch gekennzeichnet, dass** das Verbindungsstück (17) zur Anordnung auf einer hinteren Strebe (18) des Rahmens (10) des Fahrrades (2) ausgebildet ist.

9. Gangschaltungseinrichtung (1) für ein Fahrrad (2) gemäß einem der Ansprüche 7 oder 8, **dadurch gekennzeichnet, dass** das Verbindungsstück (17) an seiner äußeren Fläche Aussparungen (19) aufweist, die den Durchgang der Kettenblätter (4a, 4b) gestatten, wobei diese Aussparungen der äußeren Fläche des Verbindungsstücks (17) ein Treppenprofil verleihen.

10. Gangschaltungseinrichtung (1) für ein Fahrrad (2) gemäß einem der vorhergehenden Ansprüche, **dadurch gekennzeichnet, dass** sie zur Anordnung auf Höhe des Kettentriebes (3) ausgebildet ist und es gestattet, die Antriebskette von einem Kettenblatt (4a, 4b, 4c) auf ein anderes Kettenblatt zu übertragen.

## Claims

1. Gear-change device (1) for a cycle (2) of the type with drive by means of a chain (5), pinions (7) and disc (4a, 4b, 4c), the said device consisting of a control device (DC) which is designed to actuate a mobile gear change unit (8) which co-operates with the drive chain (5) in order to make the latter move from one pinion or disc (4a, 4b, 4c, 7) to another pinion or disc (4a, 4b, 4c, 7), **characterised in that** the mobile gear-change unit is mobile in pivoting around a pivoting shaft (9), which is disposed in a substantially longitudinal plane such as to give rise to rotation of the said mobile unit in a transverse plane.

2. Gear-change device (1) according to claim 1 for a cycle (2), **characterised in that** the mobile gear-change unit (8) comprises two lateral actuating elements (11, 12) which are designed to co-operate with the drive chain(5), an inner lateral element (11) and an outer lateral element (12).

3. Gear-change device (1) according to claim 2 for a cycle (2), **characterised in that** the inner lateral element (11) consists of a longilinear element of revolution, the outer surface (11a) of which is designed to co-operate with the chain (5) during pivoting of the mobile unit (8) of the longitudinal plane (P) of the frame (10) of the cycle (2) towards the exterior (EXT).

4. Gear-change device (1) according to claim 2 or claim 3 for a cycle (2), **characterised in that** the outer lateral element (12) is formed by an outer flange, the inner surface (12a) of which is designed to co-operate with the chain (5) when the mobile unit (8) pivots from the exterior (EXT) towards the longitudinal plane (P) of the frame (10) of the cycle (2).

5. Gear-change device (1) according to any one of the preceding claims for a cycle (2), **characterised in that** the pivoting shaft (9) of the mobile gear-change unit (8) is situated at the lower end of the said unit, the pivoting of the mobile unit taking place above the substantially horizontal plane which contains the pivoting shaft (9).

6. Gear-change device (1) according to any one of the preceding claims for a cycle (2), **characterised in that** the mobile gear-change unit (8) pivots in a plane (1) which is inclined relative to the vertical.

7. Gear-change device (1) according to any one of the preceding claims for a cycle (2), **characterised in that** the pivoting shaft (9) is fitted such as to pivot on a connection part (17) which is secured to the frame (10).

8. Gear-change device (1) according to claim 7 for a cycle (2), **characterised in that** the connection part (17) can be fitted on a rear stay (18) of the frame (10) of the cycle (2).

9. Gear-change device (1) according to claim 7 or claim 8 for a cycle (2), **characterised in that** the connection part (17) has on its outer surface undercuts (19) which are designed to permit passage of the discs (4a, 4b), these undercuts providing the outer surface of the connection part (17) with a stepped profile.

10. Gear-change device (1) according to any one of the preceding claims for a cycle (2), **characterised in that** it can be disposed at the level of the pedal and gear mechanism (3) and makes it possible to move the chain from one disc (4a, 4b, 4c) to another disc.
